**Europäisches Patentamt**

**European Patent Office**

**Office européen des brevets**

(19)

(11) Veröffentlichungsnummer : **0 428 048 B1**

(12)

# EUROPÄISCHE PATENTSCHRIFT

(45) Veröffentlichungstag der Patentschrift :
**28.10.92 Patentblatt 92/44**

(51) Int. Cl.$^5$ : **B60K 26/04, F02D 29/02**

(21) Anmeldenummer : **90121281.1**

(22) Anmeldetag : **07.11.90**

(54) **Einrichtung zur Steuerung des Motors in Verbindung mit der Kupplung eines Kraftfahrzeugs.**

(30) Priorität : **13.11.89 DE 3937692**

(43) Veröffentlichungstag der Anmeldung :
**22.05.91 Patentblatt 91/21**

(45) Bekanntmachung des Hinweises auf die
Patenterteilung :
**28.10.92 Patentblatt 92/44**

(84) Benannte Vertragsstaaten :
**DE FR GB IT NL SE**

(56) Entgegenhaltungen :
**EP-A- 0 130 794**
**DE-A- 3 334 717**
**FR-A- 2 194 233**
**PATENT ABSTRACTS OF JAPAN vol. 8, no.**
**244 (M-337)(1681) 09 November 84, & JP-A-59**
**122744 (NISSAN JIDOSHA) 16 Juli 84,**
**PATENT ABSTRACTS OF JAPAN vol. 8, no.**
**164 (M-313)(1601) 28 Juli 84, & JP-A-59 58131**
**(TOYO KOGYO) 03 April 84,**

(73) Patentinhaber : **Iveco Magirus**
**Aktiengesellschaft**
**Schillerstrasse 2 Postfach 27 40**
**W-7900 Ulm/Donau (DE)**

(72) Erfinder : **Giurca, Octavian, Dipl.-Ing.**
**Staufenstrasse 67**
**W-7908 Niederstotzingen (DE)**
Erfinder : **Rau, Kurt, Dipl.-Ing. (FH)**
**Joh.-Palm-Strasse 95**
**W-7900 Ulm (DE)**

(74) Vertreter : **Socha, Peter**
**Iveco Magirus AG Postfach 2740**
**Schillerstrasse 2**
**W-7900 Ulm (DE)**

**Beschreibung**

Die Erfindung betrifft eine Einrichtung zur Steuerung des Motors in Verbindung mit der Kupplung eines Kraftfahrzeugs, mit einer elektronischen Steuereinheit, die die Einspritzpumpe des Motors ansteuert, welche ihrerseits über eine Füllungsregelung angesteuert ist.

Aus DE-OS 33 34 717 ist eine Einrichtung zur Steuerung eines Motors und einer Kupplung eines Kraftfahrzeugs bekannt, welche eine Einkuppel-Steuereinrichtung verwendet, die während des Einkuppelvorgangs eine genaue Regelung der Motordrehzahl in dem Sinne bewirkt, daß unter den verschiedenen Bedingungen ein fein dosiertes Anfahren und Schalten des Fahrzeugs ermöglicht wird. Jedoch ist die bekannte Einrichtung vergleichsweise aufwendig hinsichtlich der verwendeten elektronischen und pneumatischen Mittel.

Aufgabe der Erfindung ist die Schaffung einer Steuerungseinrichtung der eingangs genannten Art, welche besonders einfach aufgebaut ist und gleichwohl wirkungsvoll den Anfahr-Kupplungs-Ruck beseitigt.

Gelöst wird die der Erfindung zugrundeliegende Aufgabe durch die im kennzeichnenden Teil des Anspruchs 1 angegebenen Mittel.

Vorteilhaft weitergebildet wird der Erfindungsgegenstand durch die Merkmale der Unteransprüche 2 bis 12.

Wesen der Erfindung ist, die elektronische Steuereinheit, welche ohnehin am Fahrzeug für verschiedene Funktionen (z.B. Geschwindigkeitsbegrenzung, Antischlupfregelung und Motordrehzahlminderung während der Motorbremsbetätigung, TS-Getriebe) vorhanden ist, mit einem zusätzlichen UND-Glied zu versehen, welches der elektronischen Steuereinheit ein Fahrzeugstillstandssignal und ein Kupplungsbetätigungssignal einer personen-, insbesondere fußbetätigten Kupplung eingibt zwecks Reduzierung bzw. Begrenzung der Kraftstoff-Füllungsmenge der Einspritzpumpe. Hierzu wird auf besonders einfache Weise eine in der Füllungsregelung des Motors vorgesehene Rückstelleinrichtung, vorzugsweise eine pneumatische Kolben-Zylinder-Anordnung, für die Verstellung bzw. Rückstellung des Füllungsregelungshebels der Einspritzpumpe während des Anfahrens herangezogen. Die Erfindung weist mithin eine im Vergleich zum vorgenannten Stand der Technik komplizierte Einkuppel-Steuereinrichtung nicht auf, sondern es erfolgt lediglich beim Anfahren (d.h. Gas_geben zum Anfahren bei stillstehendem Fahrzeug) eine Begrenzung der Motordrehzahl im Sinne eines Schutzes der Komponenten des Antriebsstrangs vor Überlast. Aufgrund der einfachen Bauweise eignet sich die Erfindung besonders für Steuereinrichtungen bei Serienfahrzeugen und insbesondere für einen nachträglichen Einbau.

Von Vorteil ist, daß durch die Erfindung eine Vereinheitlichung mit bekannten Lösungen (Geschwindigkeitsbegrenzung, ASR, Motorbremssystem) möglich ist ("Baukastensystem"). Es ergeben sich sehr geringe Kosten in der Fertigung und im Betrieb aufgrund der einfachen Baukomponenten im Vergleich zur bekannten Anordnung. Bei Lastkraftfahrzeugen, welche mit immer stärkeren Motoren und größeren Getrieben (12 bis 16 Getriebegänge) ausgerüstet werden, besteht beim Fahrer oftmals die Tendenz, im höchstmöglichsten Gang anzufahren. Durch die Erfindung vermindert sich zwangsläufig das Motorschwungmoment, und es ist ein Fahrer gezwungen, die Getriebegänge optimal auszunutzen.

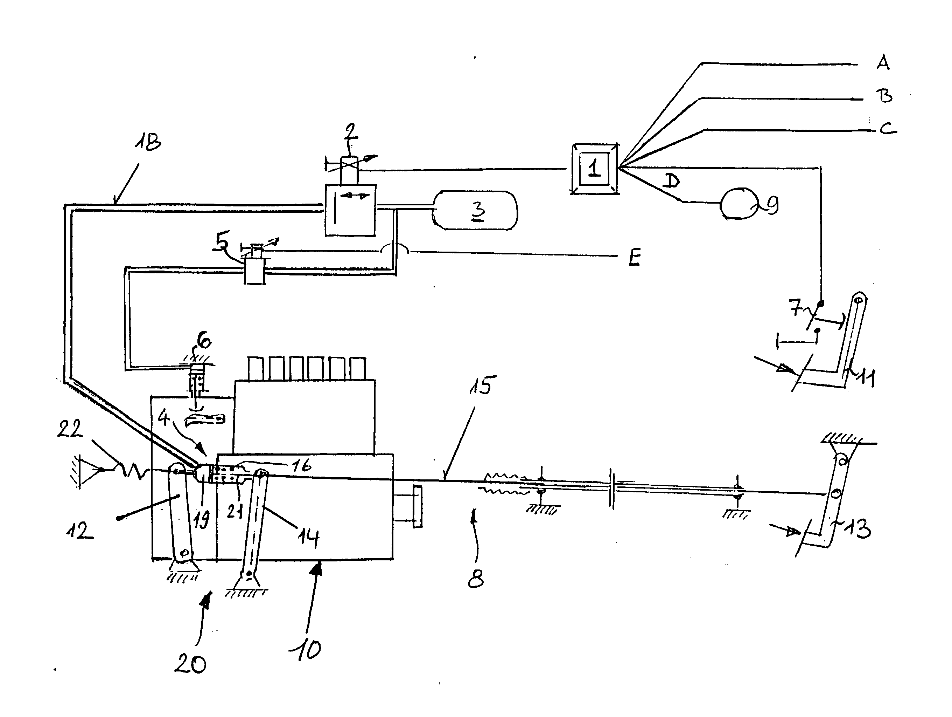

Die Erfindung wird nachfolgend anhand eines Ausführungsbeispiels unter Bezugnahme auf die aus einer einzigen Figur bestehenden Zeichnung näher erläutert.

Die Zeichnung zeigt in schematischer Darstellung eine Einrichtung (20) zur Steuerung des Motors in Verbindung mit der fußbetätigten Kupplung (11) eines Kraftfahrzeuges, welches einen Einspritzmotor mit Einspritzpumpe (10) aufweist, die über eine Füllungsregelung (8) durch das Gaspedal (13) gesteuert wird. Im Normalfall kann durch die Gaspedalbetätigung die Motordrehzahl zwischen einer minimalen und einer maximalen Drehzahl geregelt werden. Die Maximaldrehzahl wird durch Gaspedalbetätigung gemäß Zeichnung im Gegenuhrzeigersinn erzielt, wodurch der Füllungsregelungshebel (12) der Einspritzpumpe (10) im Uhrzeigersinn geschwenkt wird. Bei einem Lösen des Gaspedals (13) wird die Kraft der Feder (22) wirksam, welche den Hebel (12) wieder in seine Ausgangslage zurückstellt. Die vorstehend beschriebene Füllungsregelung (8) enthält ferner eine Rückstelleinrichtung (4) in Form einer pneumatisch betätigbaren Kolben-Zylinder-Anordnung, die fest in das System der Füllungsregelung (8) integriert ist, insbesondere das gemäß Zeichnung rechte freie Ende der Kolbenstange (16) mit der Bowdenzugleitung (15) der Füllungsregelung (8) verbunden ist. Letztgenanntes Kolbenstangenende ist auch an das freie Ende eines Stützhebels (14) angelenkt. Die Anordnung ist insgesamt so getroffen, daß die Rückstelleinrichtung (4) bzw. die Kolben-Zylinder-Anordnung zwischen den Hebeln (12, 14) gelegen ist. Der pneumatische Arbeitsraum (19) der Kolben-Zylinder-Anordnung ist über eine pneumatische Verbindung mit einem pneumatischen Proportionalitätsventil (2) verbunden, welches eingangsseitig an einen Druckluftbehälter (3) angeschlossen ist. Das Proportionalitätsventil (2) wird durch eine elektronische Steuereinheit (1) angesteuert, welche Steuersignale aus Funktionssystemen (A, B, C und D) erhält. Das Funktionssystem (A) betrifft eine Geschwindigkeits-Begrenzung, das Funktionssystem (B) eine Antischlupfregelung und das Funktionssystem (C) eine Motorbremse (Einspritzpumpe in Minimalposition).

Vorgenannte Systeme können ganz oder teilweise bei einem Fahrzeug vorhanden sein.

Die beim Fahrzeug ohnehin vorhandene elektronische Steuereinheit (1) wird nun ferner erweitert durch das Funktionssystem (D), welches insbesondere ein UND-Glied auf der Eingangsseite der elektronischen Steuereinheit enthält, welches ein Fahrzeugstillstandssignal ($s_1$) und ein Kupplungsbetätigungssignal ($s_2$) in die Einheit einspeist. Das Fahrzeugstillstandssignal ($s_1$) ist einem Tachometer (9) zugeordnet und wird hervorgerufen, wenn ein Geschwindigkeitsbereich von 0 bis ca. 3 km/h beim Fahrzeug gegeben ist. Das Kupplungsbetätigungssignal ($s_2$) wird beim Betätigen einer fußbetätigbaren Kupplung (11) erhalten dadurch, daß beim Betätigen des Kupplungspedals (11) ein elektrischer Schalter (7) geschlossen wird. Bei einem Anfahren, was grundsätzlich mit der Betätigung des Kupplungspedals (11) einhergeht, wird zum einen das elektrische Signal ($s_2$) vom Schalter (7) an die elektronische Steuereinheit (1) übertragen. Die Steuereinheit (1) wird wirksam, wenn gleichzeitig das Fahrzeug steht, also zugleich das elektrische Signal ($s_1$) vorhanden ist. Unter den vorgenannten beiden Bedingungen steuert die elektronische Steuereinheit (1) das Proportionalitätsventil (2), und es betätigt die Druckluft des Behälters (3) die Rückstelleinrichtung (4) durch Beaufschlagung des pneumatischen Arbeitsraums (19) des Zylinders: Die Rückstelleinrichtung (4) bzw. Kolben-Zylinder-Anordnung dehnt sich aus, wobei die innere Rückstellfeder (16) im Zylinder zusammengedrückt wird. Aufgrund der Ausdehnbewegung der Rückstelleinrichtung (4), welche praktisch eine "Verlängerung" der Bowdenzugleitung (15) darstellt, wird der Füllungsregelungshebel (12) der Einspritzpumpe (10) aufgrund der Kraft der Feder (22) gemäß Zeichnung im Gegenuhrzeigersinn zurückgestellt; entsprechend wird die Motordrehzahl reduziert.

Es wird also eine Reduzierung der Antriebsmomenterhöhung beim Anfahren erzielt. Die Motordrehzahl kann nicht über eine vorgewählte Grenze erhöht werden, und das Motorschwungmoment überlastet nicht die Triebstrangkomponenten.

Das veranschaulichte System umfaßt ferner einen weiteren Funktionsbereich (E), nämlich die Funktion der Motorabstellung durch ein Motorabstellventil (5) und einen Motorabstellzylinder (6) und die Funktion einer Motorbremse (Einspritzpumpe auf 0-Position).

**Patentansprüche**

1. Einrichtung (20) zur Steuerung des Motors in Verbindung mit der fußbetätigten Kupplung (11) eines Kraftfahrzeugs, mit einer elektronischen Steuereinheit (1), die die Einspritzpumpe (10) des Motors ansteuert, welche ihrerseits über eine Füllungsregelung (8) angesteuert ist, dadurch gekennzeichnet, daß der Eingang der elektronischen Steuereinheit (1) ein UND-Glied (D) aufweist, welches ein Fahrzeugstillstandssignal ($s_1$) und ein Kupplungsbetätigungssignal ($s_2$) einer fußbetätigten Kupplung (11) der elektronischen Steuereinheit (1) eingibt zwecks Reduzierung bzw. Begrenzung der Kraftstoff-Füllungsmenge der Einspritzpumpe.

2. Einrichtung nach Anspruch 1, dadurch gekennzeichnet, daß die elektronische Steuereinheit (1) an eine Rückstelleinrichtung (4) angeschlossen ist, die mit dem Füllungsregelhebel (12) der Einspritzpumpe (10) mechanisch verbunden ist und letzteren bei einer Gaspedal-Fülllungsregelung (8) zurückstellt.

3. Einrichtung nach Anspruch 2, dadurch gekennzeichnet, daß die Rückstelleinrichtung (4) in der Bowdenzugleitung (15) der Gaspedal-Füllungsregelung (8) angeordnet ist.

4. Einrichtung nach Anspruch 3, dadurch gekennzeichnet, daß die Rückstelleinrichtung (4) im Bereich des Füllungsregelhebels (12) der Einspritzpumpe angeordnet ist.

5. Einrichtung nach einem der Ansprüche 2 bis 4, dadurch gekennzeichnet, daß die elektronische Steuereinheit (1) ein pneumatisches Proportionalitätsventil (2) ansteuert, das in einer pneumatischen Verbindung (18) mit einer pneumatisch betätigten Rückstelleinrichtung (4) steht.

6. Einrichtung nach Anspruch 5, dadurch gekennzeichnet, daß die pneumatisch betätigte Rückstelleinrichtung (4) eine einseitig beaufschlagbare Kolben-Zylinder-Anordnung ist, deren pneumatischer Arbeitsraum (19) dem Füllungsregelungshebel (12) der Einspritzpumpe (10) und deren Kolbenstange (21) dem Gaspedal (13) zugewandt sind.

7. Einrichtung nach Anspruch 6, dadurch gekennzeichnet, daß im Innern der Kolben-Zylinder-Anordnung im Bereich der Kolbenstange (21) eine Rückstellfeder (16) angeordnet ist.

8. Einrichtung nach Anspruch 6 oder 7, dadurch gekennzeichnet,

daß das freie Kolbenstangenende mit der Bowdenzugleitung (15) verbunden und an das freie Ende eines einseitigen Stützhebels (14) angeordnet ist.

9. Einrichtung nach einem der Ansprüche 2 bis 8, dadurch gekennzeichnet, daß die Rückstelleinrichtung (4) mit der Einspritzpumpe (10) und/oder mit dem Motor integriert ausgebildet ist.

10. Einrichtung nach einem der Ansprüche 1 bis 9, dadurch gekennzeichnet, daß die personenbetätigte, insbesondere fußbetätigte Kupplung (11) einen elektrischen Schalter (7) aufweist, der bei Kupplungsbetätigung geschlossen wird und dem UND-Glied (D) ein elektrisches Signal ($s_2$) eingibt.

11. Einrichtung nach einem der Ansprüche 1 bis 9, dadurch gekennzeichnet, daß das Fahrzeugstillstandssignal ($s_1$) durch den Tachometer (9) des Fahrzeugs erzeugt wird.

12. Einrichtung nach Anspruch 11, dadurch gekennzeichnet, daß der Tachometerbereich von 0 bis ca. 3 km/h das elektrische Fahrzeugstillstandssignal ($s_1$) hervorruft.

## Claims

1. A device (20) for controlling the engine in combination with the pedal-operated clutch (11) of a motor vehicle, with an electronic control unit (1), which actuates the injection pump (10) of the engine, which in turn is controlled through a filling regulation system (8), characterised in that the input of the electronic control unit (1) comprises an AND-member (D) which introduces a vehicle halt signal ($s_1$) and a clutch actuation signal ($s_2$) of a pedal-operated clutch (11) of the electronic control unit (1), for the purpose of reduction or limitation of the fuel filling capacity of the injection pump.

2. A device according to Claim 1, characterised in that the electronic control unit (1) is connected to a resetting device (4) which is mechanically connected with the filling regulating lever (12) of the injection pump (10) and resets the latter in the case of an accelerator pedal filling regulation system (8).

3. A device according to Claim 2, characterised in that the resetting device (4) is arranged in the Bowden cable (15) of the accelerator pedal filling regulation system (8).

4. A device according to Claim 3, characterised in that the resetting device (4) is arranged in the region of the filling regulating lever (12) of the injection pump.

5. A device according to any one of Claims 2 to 4, characterised in that the electronic control unit (1) actuates a pneumatic proportionality valve (2) which is in a pneumatic connection with a pneumatically actuated resetting device (4).

6. A device according to Claim 5, characterised in that the pneumatically actuated resetting device (4) is a unilaterally chargeable piston-cylinder arrangement, the pneumatic working chamber (19) of which faces the charge-regulating lever (12) of the injection pump (10) and the piston rod (21) faces the gas pedal (13).

7. A device according to Claim 6, characterised in that a return spring (16) is arranged in the interior of the piston-cylinder arrangement in the region of the piston rod (21).

8. A device according to Claim 6 or 7, characterised in that the free piston rod end is connected with the Bowden cable (15) and is arranged on the free end of a unilateral support lever (14).

9. A device according to any one of Claims 2 to 8, characterised in that the resetting device (4) is made integral with the injection pump (10) and/or with the engine.

10. A device according to any one of Claims 1 to 9, characterised in that the personally actuated, especially pedal operated clutch (11),comprises an electric switch (7) which is closed in clutch actuation and imparts an electric signal ($s_2$) to the AND-member (D)

11. A device according to any one of Claims 1 to 9, characterised in that the vehicle stationary signal ($s_1$) is generated by the tachometer (9) of the vehicle.

12. A device according to Claim 11, characterised in that the tachometer range of 0 to app. 3 k m/h causes the electric vehicle halt signal ($s_1$).

## Revendications

1°) Dispositif (20) de commande du moteur en liaison avec l'embrayage (11) commandé par pédale d'un véhicule automobile à l'aide d'une unité de commande (1) électronique, qui commande la pompe à injection (10) du moteur qui est commandée de son côté par une régulation (8) de remplissage, dispositif caractérisé en ce que l'entrée de l'unité de commande électronique (1) présente une fonction ET (D) qui envoie à l'unité de commande électronique (1) un signal ($s_1$) d'arrêt de véhicule et un signal ($s_2$) d'actionnement d'un embrayage (11) commandé par pédale en vue de réduire ou de limiter la quantité de remplissage en carburant de la pompe d'injection.

2°) Dispositif selon la revendication 1, caractérisé en ce que l'unité de commande (1) électronique est branchée sur un dispositif de rappel (4) qui est relié mécaniquement au levier de réglage de remplissage (12) de la pompe à injection (10) et le rappelle lors d'un réglage de remplissage par la pédale d'accélérateur (8).

3°) Dispositif selon la revendication 2, caractérisé en ce que le dispositif de rappel (4) est implanté sur le câble de transmission Bowden (15) du réglage de remplissage (8) par la pédale de l'accélérateur.

4°) Dispositif selon la revendication 3, caractérisé en ce que le dispositif de rappel (4) est placé à proximité du levier de régulation du remplissage (12) de la pompe à injection.

5°) Dispositif selon l'une des revendications 2 à 4, caractérisé en ce que l'unité électronique de commande (1) commande une vanne proportionnelle (2) pneumatique, qui est en liaison pneumatique (18) avec un dispositif de rappel (4) actionné pneumatiquement.

6°) Dispositif selon la revendication 5, caractérisé en ce que le dispositif de rappel (4) actionné pneumatiquement est un dispositif piston-cylindre mis en charge d'un côté, dont la chambre de travail (19) pneumatique du levier de régulation de remplissage (12) de la chambre à injection (10) et sa tige de piston (2) sont tournés vers la pédale d'accélérateur (13).

7°) Dispositif selon la revendication 6, caractérisé en ce qu'un ressort de rappel (16) est implanté à l'intérieur du dispositif piston-cylindre au voisinage de la tige de piston (21).

8°) Dispositif selon la revendication 6 ou 7, caractérisé en ce que l'extrémité libre de la tige de piston est reliée au câble de transmission Bowden (15) et à l'extrémité libre d'un levier sur appui (14) sur un seul côté.

9°) Dispositif selon l'une des revendications 2 à 8, caractérisé en ce que le dispositif de rappel (4) est intégré à la pompe à injection (10) et/ou au moteur.

10°) Dispositif selon l'une des revendications 1 à 9, caractérisé en ce que l'embrayage (11) actionné par une personne, notamment à l'aide d'une pédale, présente un commutateur électrique (7), qui est fermé lors de l'actionnement de l'embrayage et envoie à la fonction ET (D) un signal électrique ($s_2$).

11°) Dispositif selon l'une des revendications 1 à 9, caractérisé en ce que le signal d'arrêt du véhicule ($s_1$) est produit par le tachymètre (9) du véhicule.

12°) Dispositif selon la revendication 11, caractérisé en ce que l'intervalle tachymétrique allant de 0 à environ 3 km/h, provoque le signal électrique ($s_1$) d'arrêt du véhicule.